# EUROPÄISCHE PATENTSCHRIFT

(11) **EP 3 217 494 B1**
(45) Veröffentlichungstag und Bekanntmachung des Hinweises auf die Patenterteilung: **24.11.2021**
(21) Anmeldenummer: 17158748.8
(22) Anmeldetag: 01.03.2017
(51) Int. Cl.: H02G 3/00, F16L 3/22, H02G 3/04, H02G 3/32

(54) **BRIDE ZUR HALTERUNG VON KABELN, VORZUGSWEISE HOCHSPANNUNGS-KABEL**
BRACKET FOR HOLDING CABLES, PREFERABLY HIGHVOLTAGE CABLES
SUPPORT POUR PORTER DES CABLES, DES CÂBLES PRÉFÉRABLES À HAUTE TENSION

(30) Priorität: 09.03.2016 CH 3132016; 26.05.2016 CH 6792016
(43) Veröffentlichungstag der Anmeldung: 13.09.2017
(73) Patentinhaber: TRESCO AG, 9404 Rorschacherberg (CH)
(72) Erfinder: ENZLER, Christian, 9404 Rorschacherberg (CH); ENZLER, Philipp, 9425 Thal (CH)
(74) Vertreter: Luchs, Willi

(56) Entgegenhaltungen:
- CA-A1- 2 800 467
- DE-A1- 2 500 925
- DE-U1- 29 507 553
- DE-U1- 29 614 016
- GB-A- 1 587 532
- US-A- 3 038 224

## Beschreibung

Die Erfindung bezieht sich auf eine Bride zur Halterung von Kabeln nach dem Oberbegriff des Anspruchs 1.

Derartige Briden werden bekanntlich als Spannvorrichtungen verwendet, welchen die Aufgabe zusteht, die Kabel von den auf sie wirkenden Zugspannungen zu entlasten. In der Praxis werden die Kabel in Bündeln von normalerweise drei nebeneinander verlaufenden Einzelkabeln eingezogen, wobei jedes Kabel separat mit einzeln Briden gesichert wird. Das hat zur Folge, dass die Kabel bei der Montage auseinandergefahren werden müssen, so dass ein grösserer Montageplatz und auch zusätzliche Mehrarbeit nötig sind.

Gemäss der Druckschrift DE-Gbm-295 07 553 ist eine Scheibenschelle geoffenbart, bei der ein Oberteil und ein Unterteil mit entsprechenden Ausbuchtungen vorgesehen sind, in welche maximal drei Kabel einsetzbar sind. Es sind dabei Scheiben in den Ausbuchtungen vorgesehen, die sich in letztere erstrecken und ein Schliessen des Durchgangs ermöglichen, um die Anzahl und Durchmesser der hindurchzuführenden Kabel abzustimmen. Es sind aber bei dieser Scheibenschelle keinerlei Hinweise gegeben, wie dieser Ober- mit dem Unterteil geklemmt wird.

Bei einer Klemmvorrichtung gemäss der Druckschrift US-A-3,038,224 sind Klemmelemente als gerundete Drähte und ein diese haltendes Formelement mit Bolzen vorgesehen. Damit können beispielsweise Rohre nebeneinander befestigt werden. Eine solche Klemmvorrichtung eignet sich aber nicht für die Befestigung zum Beispiel von Hochspannungskabeln, weil diese Drähte nicht eine Flächenbelastung ermöglichen und damit die Kabelisolation beschädigen würden.

Eine Vorrichtung zum Sichern von mindestens einem Kabel nach der Druckschrift GB-A-1 587 532 besteht aus einem Basiselement, an diesem befestigte Arme und gegenüberliegend aus einem Bolzen, welcher die beiden Arme oberseitig verspannt und damit dieses eine oder mehrere Kabel festklemmt. Auch bei dieser Vorrichtung ist nachteilig, dass die Verspannflächen zwischen Kissen und den Kabeln linienförmig verlaufen und damit die Verspannkraft limitiert ist. Das mag für dünne leichte Kabel ausreichen, aber nicht für beispielsweise Hochspannungskabel.

In der Druckschrift CA-A-2 800 467 ist ein Apparat zum Tragen von Kabeln offenbart, bei dem aufeinander stapelbare Blöcke mit einer entsprechenden Anzahl von queren Passagen für das Tragen von Elektrokabeln sowie Löchern zwischen diesen Passagen für das Zusammenschrauben dieser Blöcke vorhanden sind. Diese Blöcke werden mit Schrauben, die sich durch die Blöcke erstrecken, und Muttern jeweils im untersten Block miteinander befestigt. Diese Blöcke bilden aber ebenso relativ schmale Auflageflächen da diese bloss eine Schraube in Längsrichtung der Passage bzw. des eingespannten Kabels aufweisen. Zusätzlicher Stand der Technik wird in DE29614016 U1 und in DE2500925 A1 offenbart.

Der Erfindung liegt demgegenüber die Aufgabe zugrunde, diese Nachteile zu vermieden und eine Bride der eingangs genannten Art zu schaffen, welche den Einbau unter ungünstigen Platzverhältnissen ermöglicht und eine Einsparung des Montageaufwandes ermöglicht.

Diese Aufgabe ist erfindungsgemäss durch die Merkmale des Anspruchs 1 gelöst.

Die erfindungsgemässe Bride erhält dadurch einen kompakten, platzsparenden Aufbau, der gleichzeitig eine vollkommen zugfeste Fixierung der Energiekabel gewährleistet.

Sie ermöglicht zudem die Zugentlastung von drei Energiekabeln auf einmal sowie beträchtliche Erleichterung der Montagearbeit, weil die Kabel nicht mehr auseinandergefahren werden müssen.

Aufgrund dieser Vorteile ist die Bride besonders geeignet zum gleichzeitigen Einziehen von Hochspannungskabeln in Rohrstrassen mit einem Kabelschutzrohr zur Aufnahme von drei Kabeln.

Die Erfindung sieht ferner vor, dass der Spannkörper der Bride im Querschnitt ein Dreieck bildet, wobei der Mittelteil einerseits mit dem Unterteil und andererseits mit dem Oberteil paarweise als Klemmbacken zum Fixieren der Energiekabel in den Durchführungskanälen des Spannkörpers wirken. Diese Anordnung erleichtert die Verlegung und Fixierung der drei Kabel, und hat zudem einen konstruktiv einfachen und robusten Aufbau, der die feste Fixierung der drei Kabel sicherstellt.

Es ist auch in diesem Sinne vorteilhaft, wenn die Durchführungskanäle des Spannkörpers hälftig in dem Klemmbacken des jeweiligen Klemmbackenpaars ausgespart sind, wobei sie in Hinblick auf den in der Regel runden Querschnitt der Energiekabel zweckmässigerweise einen kreisförmige Querschnitt aufweisen, dessen Durchmesser dem der einzuziehenden Kabel angepasst ist.

Es ist auch zum Schutz der Kabelumhüilung von Vorteil, wenn die Durchführungskanäle im Bereich der Klemmbacken mit einer dem Kanalquerschnitt angepassten Gummieinlage oder dergleichen versehen sind.

Die Erfindung sieht ebenfalls vor, dass die Klemmbacken paarweise durch Befestigungsmittel gegeneinander festspannbar sind, die reihenförmig beidseitig der Klemmbacken in seitlich ausstehenden Ansätzen der Klemmbacken geführt sind. Das ermöglicht die Anordnung einer Vielzahl von Befestigungsmitteln auf beiden Seiten der Klemmbacken, die eine gleichmässig feste Fixierung der Energiekabel jeweils über die gesamte oder über einen Teil der Baulänge der Bride gewährleistet.

Es ist konstruktiv und montagetechnisch vorteilhaft, wenn das untere Klemmbackenpaar zwei Durchführungskanäle enthält und seine Klemmbacken zusätzlich mit einer zwischen den beiden Durchführungskanälen angeordneten Reihe Spannschrauben festspannbar sind.

Der Spannkörper kann auf einem Stützträger oder Fundament mit Befestigungsschrauben verankert werden, die vorzugsweise zwischen den äusseren Spannschrauben des unteren Klemmbackenpaars geführt sind. Diese Anordnung ermöglicht die Befestigung der Bride auf dem dafür vorgesehenen Tragkörper unabhängig davon, ob die Kabel bereits in den Durchführungskanälen der Bride eingelegt sind.

Die Erfindung ist nachfolgend anhand eines Ausführungsbeispiels unter Bezugnahme auf die Zeichnung näher beschreiben. Es zeigen:
- Fig. 1: den Zusammenbau einer erfindungsgemässen Bride, perspektivisch dargestellt,
- Fig. 2: einen Schnitt durch die Bride nach Fig. 1,
- Fig. 3: einen Querschnitt einer Bride, welche jedoch nicht durch die beanspruchte Erfindung abgedeckt wird (gemäss der Linie I - I nach Fig. 4), und
- Fig. 4: eine Seitenansicht der Bride nach Fig. 3.

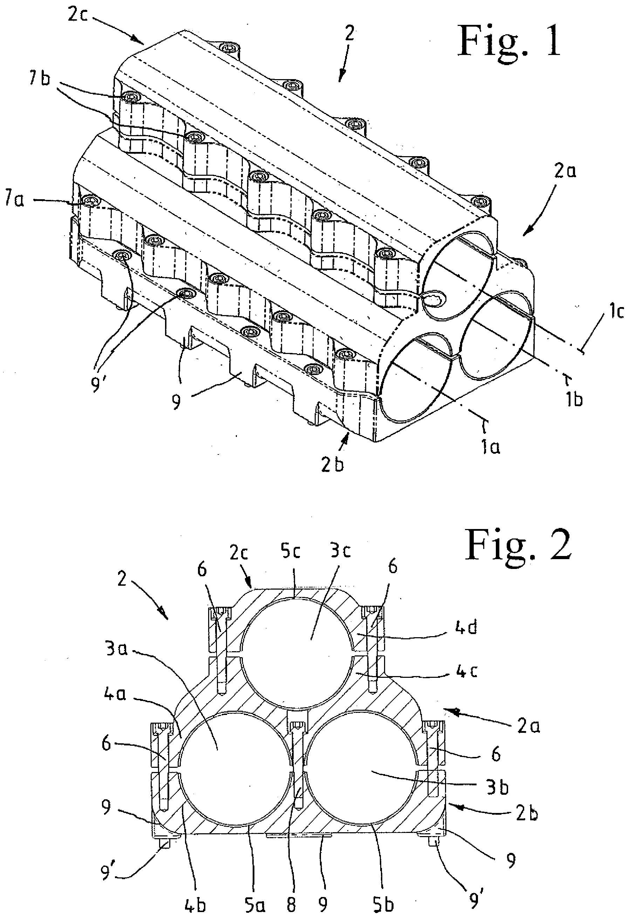

Die Bride gemäss Fig. 1 dient zur Zugentlastung von drei Energiekabeln entlang der jeweils festgelegten Stromstrasse. Sie ist insbesondere für Hochspannungskabel von bis zu 200 mm Durchmesser sowohl als Schichtenmantelkabel wie auch als Kupfer- und Aluwellmantelkabel, armierte und nicht armierte Kabel, Kunststoff, Öl- und Gaskabel oder als Spezialkabel mit Glasfasereinsätzen verwendbar. Die drei Energiekabel sind mit ihren Mittelachsen 1a, 1b, 1c symbolisch angedeutet.

Wie aus Fig. 1 ersichtlich ist, weist die Bride einen länglichen Spannkörper 2 auf, der mit drei im Querschnitt dreieckig angeordneten Durchführungskanälen 3a, 3b, 3c für die Energiekabel 1a bis 1c versehen ist. Der Spannkörper 2 ist im Querschnitt dreiteilig ausgebildet, wobei der Mittelteil 2a mit dem Unterteil 2b und dem Oberteil 2c je ein Paar Klemmbacken 4a, 4b bzw. 4c, 4d zum Fixieren der Energiekabel 1a bis 1c in den Durchführungskanälen 3a bis 3c des Spannkörpers 2 bilden. Diese weisen einen kreisförmigen Querschnitt auf, dessen Durchmesser dem der jeweils einzuziehendem Energiekabel angepasst ist. Sie sind hälftig in den Klemmbacken der beiden Klemmbackenpaare 4a, 4b bzw. 4c, 4d ausgespart. Zudem sind sie im Bereich der Klemmbacken mit Einlagen, wie Gummieinlagen 5a, 5b, 5c zum Schutz der Kabelummantelung versehen.

Zum Fixieren der Energiekabel 1a bis 1c in der Bride sind die Klemmbacken 4a bis 4d paarweise gegeneinander mit Befestigungsmitteln, zum Beispiel mit zylindrischen Spannschrauben 6 festspannbar, die reihenweise beidseitig der Klemmbacken mit seitlich vorstehenden Ansätzen 7a, 7b der Klemmbacken geführt sind. Dadurch den annähernd dreieckigen Querschnitt des Spannkörpers 2 sind die Schraubenreihen des einen Klemmbackenpaars 4a, 4b unabhängig von denen des anderen Klemmbackenpaars 4c, 4d frei zugänglich.

Beim erläuterten Ausführungsbeispiel sind die Durchführungskanäle 3a bis 3c so angeordnet, dass das untere Klemmbackenpaar 4a, 4b zwei der drei Durchführungskanäle aufnehmen kann. Zum Fixieren der beiden Energiekabel 1a und 1b ist das Klemmbackenpaar 4a, 4b zusätzlich mit einer dazwischen angeordneten Reihe Spannschrauben 8 festspannbar, die nach Entfernung der Oberteils 2c des Spannkörpers 2 zugänglich sind.

Im Unterteil 2b des Spannkörpers sind Ansätze 9 zum Abstützen der Bride auf einem Fundament oder Stützträger vorgesehen, und der Spannkörper ist auf ihm mit Befestigungsmitteln, wie Schrauben 9', befestigbar, die beidseitig zwischen den äusseren Spannschrauben 6 des unteren Klemmbackenpaars 4a, 4b geführt sind.

Die längliche Ausbildung des Spannkörpers 2 und die halbkreisförmigen Aussparungen für die Durchführungskanäle 3a bis 3c in den Klemmbacken 4a bis 4d tragen dazu bei, dass die Kabel 1a bis 1c in der Bride gleichmässig und vollkommen fest fixiert sind.

Die vorgeschlagene Anordnung der Spannschrauben trägt auch dazu bei, dass sich die erfindungsgemässe Bride durch einen sehr kompakten und platzsparenden Aufbau auszeichnet, wobei die vorgeschlagene Anordnung der Spannschrauben 6 die Betätigung der beiden Klemmbackenpaare 4a, 4b und 4c unabhängig voneinander ermöglicht. Ausserdem wird die Montagearbeit durch die freie Zugangsmöglichkeit der Spannschrauben sehr erleichtert.

Die Durchführungskanäle 3a bis 3d sind mit einem kreisförmigen Querschnitt versehen. In besonderen Fällen können sie aber auch ohne weiteres einen beispielweise wellig oder polygonal profilierten Querschnitt aufweisen, wenn sie damit eine bessere Fixierung der einzuziehenden Kabel gewährleisten.

Der Durchmesser der drei Durchführungskanäle 3a, 3b, 3c ist gleich bemessen veranschaulicht. Die erfindungsgemässe Bride kann aber auch ohne weiteres mit Durchführungskanälen unterschiedlichen Durchmessers versehen sein.

Als Befestigungsmittel könnten anstelle von Spannschrauben 6 auch Spannbriden oder ähnliches verwendet werden.

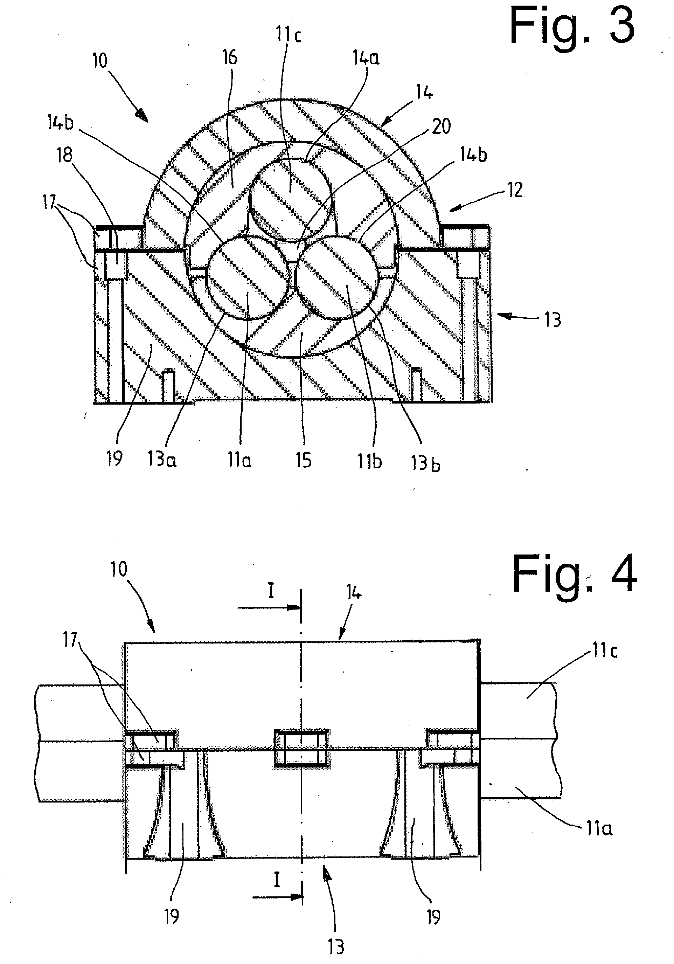

Die nicht beanspruchte Bride 10 gemäss Fig. 3 und Fig. 4 dient zur Zugentlastung von drei Energiekabeln 11a, 11b, 11c. Sie kann auf einem Stützträger oder Fundament mit Befestigungsschrauben verankert werden, die vorzugsweise zwischen den äusseren Spannschrauben des unteren Klemmbackenpaars geführt sind. Diese Anordnung ermöglicht die Befestigung der Bride auf dem dafür vorgesehenen Tragkörper unabhängig davon, ob die Kabel bereits in den Durchführungskanälen der Bride eingelegt sind oder nicht.

Wie aus Fig. 3 ersichtlich ist, weist die Bride einen länglichen Spannkörper 12 auf, der mit drei im Querschnitt dreieckig angeordneten Durchführungskanälen 13a, 13b, 13c für die Energiekabel 11a, 11b, 11c versehen ist.

Der Spannkörper 12 ist im Querschnitt mit einem Unterteil 13 und einem Oberteil 14 mit je einer Klemmbacke 15, 16 zum Fixieren der Energiekabel 11a, 11b, 11c in den Durchführungskanälen 13a, 13b, 13c zusammengesetzt. Letztere weisen einen kreisförmigen Querschnitt auf, dessen Durchmesser demjenigen der jeweils zu fixierenden Energiekabel angepasst ist, d.h. annähernd den gleichen Durchmesser aufweisen. Sie sind hälftig in den Klemmbacken 15, 16 ausgespart. Zudem können sie mit Einlagen, wie Gummieinlagen zum Schutz der Kabelummantelung versehen sein.

Zum Fixieren der Energiekabel 11a, 11b, 11c in der Bride 10 sind die Klemmbacken 15, 16 gegeneinander mit Befestigungsmitteln, zum Beispiel mit zylindrischen Spannschrauben 18 festspannbar, die beidseitig der Klemmbacken mit seitlich vorstehenden Ansätzen 17 der Klemmbacken geführt sind.

Im Unterteil 13 des Spannkörpers 12 sind Ansätze 19 zum Abstützen der Bride 10 auf einem Fundament, Stützträger oder dergleichen vorgesehen, und der Spannkörper ist auf ihm befestigbar.

Die längliche Ausbildung des Spannkörpers 12 und die halbkreisförmigen Aussparungen für die Durchführungskanäle 13a, 13b, 13c in den Klemmbacken 15, 16 tragen dazu bei, dass die Kabel 11a, 11b, 11c in der Bride gleichmässig und vollkommen fest fixiert sind. Zweckmässigerweise sind der Klemmbacke 15 des Unterteils 13 zwei Durchführungskanäle 13a, 13b, indes der Klemmbacke 16 des Oberteils 14 der dritte Durchführungskanal 14a zugeordnet.

Diese Klemmbacke 16 des Oberteils 14 ist im Querschnitt derart geformt, dass in seinem Zentrum der Durchführungskanal 14a für das obere Kabel 11c und an seiner Unterseite beidseitig neben diesem Durchführungskanal 14a je eine segmentförmige Spannfläche 14b für das Anpressen der beiden nebeneinander liegenden Kabel 11a, 11b in die untere Klemmbacke 15 vorgesehen ist.

Diese segmentförmigen Spannflächen 14b sind im Querschnitt betrachtet mit den Rundungen wie der Durchmesser der Kabel 11a, 11b annähernd gleich dimensioniert und sie erstrecken sich annähernd um einen Winkel von 90°. Die Klemmbacke 16 des Oberteils 14 ragt vorzugsweise in die Öffnung des Unterteils 13 und ist darin seitlich geführt.

Sehr vorteilhaft ist, wenn eine Längseinlage 20 zwischen den Klemmbacken 16 eingelegt wird, welche zwischen die drei Kabel 11a, 11b, 11c einlegbar ist und sich annähernd über die Länge der Bride 10 erstreckt. Diese Längseinlage 20 ist dabei so bemessen, dass die drei Kabel jeweils flächig bei ihr aufliegen und mittels der nebst den Spannflächen 14b ein zusätzlicher Anpressdruck auf die beiden nebeneinander liegenden Kabel 11a, 11b erzeugbar ist. Damit wird ein gleichmässiges Andrücken auf die drei Kabel beim Spannen des Oberteils auf den Unterteil bewirkt.

Im Prinzip könnte auch auf diese Längseinlage 20 verzichtet werden und es würde dann das Kabel 11c im Oberteil 14 direkt auf den unteren beiden Kabel 11a, 11b aufliegen und vorteilhaft im verspannten Zustand einen Druck auf diese ausüben.

Die vorgeschlagene Anordnung der Spannschrauben trägt auch dazu bei, dass die erfindungsgemässe Bride sich durch einen sehr kompakten und platzsparenden Aufbau auszeichnet.

Die Durchführungskanäle 13a, 13b, 13c sind mit einem kreisförmigen Querschnitt versehen. In besonderen Fällen können sie aber auch ohne weiteres einen beispielweise wellig oder polygonal profilierten Querschnitt aufweisen, wenn sie damit eine bessere Fixierung der einzuziehenden Kabel gewährleisten.

Der Durchmesser der drei Durchführungskanäle 13a, 13b, 13c ist gleich bemessen veranschaulicht. Die erfindungsgemässe Bride kann aber auch ohne weiteres mit Durchführungskanälen unterschiedlichen Durchmessers versehen sein.

Diese Bride 10 kann sowohl aus unterschiedlichen Metallen, wie Aluminium mit Chromstahlschrauben oder mit verzinkten Schrauben, oder auch aus Kunststoff, ebenfalls mit Chromstahlschrauben oder mit verzinkten Schrauben gefertigt werden. Ausserdem können der halbschalenförmige.Unter- bzw. Oberteil 13, 14 und die zugehörigen Klemmbacken 15, 16 aus unterschiedlichen Materialien und entweder spanabhebend, gegossen oder als Kunststoffspritzguss, durch 3D-Herstellungsverfahren, als Verbundwerkstoffe und/oder aus Holzerzeugnissen hergestellt sein.

Die Erfindung ist mit den in Fig. 1 und Fig. 2 erläuterten Ausführungsbeispiel ausreichend dargetan. Sie liesse sich jedoch noch in anderen Varianten darstellen. Im Prinzip könnten auch vier oder noch mehr Durchführungskanäle vorgesehen sein, bei dem diese vorteilhaft je zwei übereinander angeordnet wären.

Die Klemmbacken könnten auch in den Unter- bzw. Oberteil 13, 14 eingearbeitet sein bzw. jeweils einstückig aus demselben Material bestehen.

## Patentansprüche

1. Bride zur Halterung von Kabeln, vorzugsweise Hochspannungs-Kabel, welche einen länglichen Spannkörper (2) für die Aufnahme von Kabeln (1a, 1b, 1c) umfasst, wobei der mit wenigstens drei im Querschnitt ein Dreieck bildende Durchführungskanälen (3a, 3b, 3c) für die Aufnahme der Kabel (1a, 1b, 1c) versehene längliche Spannkörper (2) wenigstens einen Unterteil (2a), einen Mittelteil (2a) und einen Oberteil (2c) aufweist, wobei der Mittelteil (2a) mit dem Unterteil (2b) und dem Oberteil (2c) je paarweise Klemmbacken (4a, 4b bzw. 4c, 4d) zum Fixieren der Kabel (1a, 1b, 1c) in den Durchführungskanälen (3a, 3b, 3c) bilden, wobei die Klemmbacken (4a bis 4d) paarweise mit Befestigungsmittein, vorzugsweise Spannschrauben (6), gegeneinander festspannbar sind, die reihenförmig beidseitig der Klemmbacken (4a bis 4d) in seitlich ausstehenden Ansätzen (7a,7b) der Klemmbacken geführt sind, wobei die Durchführungskanäle (3a, 3b, 3c) hälftig in den Klemmbacken des jeweiligen Klemmbackenpaars (4a, 4b bzw. 4c 4d) ausgespart sind und jeweils einen kreisförmigen Querschnitt aufweisen.

2. Bride nach Anspruch 1, wobei die Durchführungskanäle (3a, 3b, 3c) im Bereich der Klemmbacken mit jeweils einer dem Kanalquerschnitt angepassten Einlage (5a, 5b bzw. 5c) für ein schonendes Klemmen der Kabel versehen sind.

3. Bride nach Anspruch 1, wobei das untere Klemmbackenpaar (4a, 4b) zwei Durchführungskanäle (3a, 3b) enthält und zusätzlich mit einer zwischen diesen angeordneten Reihe Spannschrauben (8) festspannbar ist.

4. Bride nach einem der vorhergehenden Ansprüche 1 bis 3, wobei der Spannkörper (2) auf einem Stützträger oder Fundament mit Befestigungsschrauben (9') befestigbar ist, welche zwischen den äusseren Spannschrauben (6) des unteren Klemmbackenpaars (4a, 4b) geführt sind.

## Claims

1. Clamp for holding cables, preferably high-voltage cables, which comprises an elongated clamping body (2) for receiving cables (1a, 1b, 1c), whereby the elongated clamping body (2) is provided with at least three ducts (3a, 3b, 3c) for receiving the cables (1a, 1b, 1c) forming a triangular in cross section and having at least a lower part (2a), a middle part (2a) and an upper part (2c), whereby
the middle part (2a) with the middle part (2a) and the upper part (2c) are respectively forming pairwise clamping jaws (4a, 4b or 4c, 4d) for fixing the cables (1a, 1b, 1c) in the ducts (3a, 3b, 3c), whereby the clamping jaws (4a to 4d) can be clamped against one another in pairs with fastening means, preferably clamping screws (6), which are guided in rows on both sides of the clamping jaws (4a to 4d) in laterally protruding shoulders (7a, 7b) of the clamping jaws, whereby the ducts (3a, 3b, 3c) are recessed as half in the clamping jaws of the respective clamping jaw pair (4a, 4b or 4c, 4d) and each have a circular cross-section.

2. Clamp according to claim 1,whereby
the ducts (3a, 3b, 3c) in the area of the clamping jaws are each provided with an insert (5a, 5b or 5c) adapted to the duct cross-section for gentle clamping of the cables.

3. Clamp according to claim 1,whereby
the lower pair of clamping jaws (4a, 4b) contains two ducts (3a, 3b) and can also be tightened with a row of clamping screws (8) arranged between them.

4. Clamp according to one of the preceding claims 1 to 3, whereby
the clamping body (2) can be fastened to a support beam or foundation with fastening screws (9 '), which are guided between the outer clamping screws (6) of the lower pair of clamping jaws (4a, 4b).

## Revendications

1. Bride de support de câbles, de préférence de câbles de haute tension, qui comprend une pièce (2) oblongue de serrage pour la réception de câbles (1a, 1b, 1c), la pièce (2) oblongue de serrage, pourvue d'au moins trois canaux (3a, 3b, 3c) de passage, formant en section transversale un triangle, pour la réception des câbles (1a, 1b, 1c) ayant au moins une partie (2a) inférieure, une partie (2a) médiane et une partie (2c) supérieure, dans laquelle la partie (2a) médiane forme avec la partie (2b) inférieure et la partie (2c) supérieure respectivement des mâchoires (4a, 4b et 4c, 4d) de serrage par paire pour l'immobilisation des câbles (1a, 1b, 1c) dans les canaux (3a, 3b, 3c) de passage, dans laquelle les mâchoires (4a à 4d) de serrage peuvent être bloquées fixement par paire l'une contre l'autre par des moyens de fixation, de préférence par des vis (6) de serrage, qui sont guidées dans des appendices (7a, 7b) des mâchoires de serrage en saillie latéralement en forme de rangée des deux côtés des mâchoires (4a à 4d) de serrage, les canaux (3a, 3b, 3c) de passage étant ménagés à moitié dans les mâchoires de serrage de la paire (4a, 4b et 4c, 4d) de mâchoires de serrage et ayant chacun une section transversale circulaire.

2. Bride suivant la revendication 1, dans laquelle les canaux (3a, 3b, 3c) de passage dans la partie des mâchoires de serrage sont pourvus chacun d'une doublure (5a, 5b et 5c) adaptée à la section transversale du canal pour un serrage ménagé du câble.

3. Bride suivant la revendication 1, dans laquelle la paire (4a, 4b) inférieure de mâchoires de serrage comporte deux canaux (3a, 3b) de passage et peut être bloquée fixement en outre par une rangée de vis (8) de serrage disposée entre elles.

4. Bride suivant l'une des revendications 1 à 3, dans laquelle la pièce (2) de serrage peut être fixée sur un support d'appui ou un socle par des vis (9') de fixation, qui passent entre les vis (6) extérieures de serrage de la paire (4a, 4b) inférieure de mâchoires de serrage.
